# EUROPÄISCHE PATENTSCHRIFT

(11) **EP 1 673 959 B1**
(45) Veröffentlichungstag und Bekanntmachung des Hinweises auf die Patenterteilung: **18.07.2007**
(21) Anmeldenummer: 04766293.7
(22) Anmeldetag: 22.07.2004
(51) Int. Cl.: H04Q 7/38, G01S 5/02, G01S 5/14

(54) **VERFAHREN UND VORRICHTUNG ZUR ÜBERPRÜFUNG DER DURCH EIN FUNKKOMMUNIKATIONSSYSTEM DURCHGEFÜHRTEN BESTIMMUNG DER POSITION EINER MOBILSTATION**
METHOD AND DEVICE FOR CHECKING THE DETERMINATION OF THE POSITION OF A MOBILE STATION CARRIED OUT BY A RADIO COMMUNICATION SYSTEM
PROCEDE ET SYSTEME POUR CONTROLER LA DETERMINATION DE LA POSITION D'UNE STATION MOBILE EFFECTUEE PAR UN SYSTEME DE RADIOCOMMUNICATION

(30) Priorität: 15.10.2003 EP 03023552
(43) Veröffentlichungstag der Anmeldung: 28.06.2006
(73) Patentinhaber: SIEMENS AKTIENGESELLSCHAFT, 80333 München (DE)
(72) Erfinder: MEILING, Axel, 82024 Taufkirchen (DE)
(86) Internationale Anmeldenummer: PCT/EP2004/051580
(87) Internationale Veröffentlichungsnummer: WO 2005/039226

(56) Entgegenhaltungen:
- WO-A-02/054813
- US-A- 6 014 102
- US-A- 6 166 685
- US-B1- 6 230 018

## Beschreibung

Die Erfindung betrifft ein Verfahren zur Behandlung von Positionsbestimmungen im Zusammenhang mit einer Überprüfung der durch ein Funkkommunikationssystem durchgeführten Bestimmung der Position einer Mobilstation und eine Vorrichtung zur Durchführung des Verfahrens.

In Funkkommunikationssystemen werden Informationen (beispielsweise Sprache, Bildinformation, Videoinformation, SMS (Short Message Service), MMS (Multimedia Messaging Service) oder andere Daten) mit Hilfe von elektromagnetischen Wellen über eine Funkschnittstelle zwischen sendender und empfangender Funkstation übertragen. Bei den Funkstationen kann es sich hierbei je nach konkreter Ausgestaltung des Funkkommunikationssystems z.B. um verschiedenartige Mobilstationen, Funkzugangspunkte oder Basisstationen handeln. Das Abstrahlen der elektromagnetischen Wellen erfolgt dabei mit Trägerfrequenzen, die in dem für das jeweilige System vorgesehenen Frequenzband liegen.

Die Lokalisierung von Mobilstationen in Funkkommunikationssystemen gewinnt zunehmend an Bedeutung. Zum einen gibt es in einigen Ländern gesetzliche Regelungen, welche die Netzbetreiber zur Positionsbestimmung von Notrufen verpflichten. Zum anderen findet eine Kommerzialisierung von ortsbezogenen Diensten statt, die eine zuverlässige Positionsbestimmung von Mobilstationen voraussetzt. Es existieren eine Vielzahl von technischen Lösungen zur Bestimmung der Position einer Mobilstation durch ein Funkkommunikationssystem, welche unterschiedliche Genauigkeiten liefern und unterschiedlichen Aufwand erfordern. Beispielsweise kann die Positionsbestimmung einer Mobilstation anhand eines CITA (Cell ID Timing Advance), EOTD (Enhanced Observed Time Difference), UTDOA (Uplink Time Difference of Arrival) oder mittels eines AGPS (Assisted Global Positioning System) Verfahrens erfolgen.

Das Dokument US 6,166,685 beschreibt ein Verfahren zur Bestimmung bzw. zum Nachführen der Position einer Mobilstation. Zuerst wird die Position der Mobilstation über GPS bestimmt. Weiterhin wird die Position der Mobilstation über Infrastrukturmessungen des Funkkommunikationssystems bestimmt. Die beiden Positionen werden verglichen, um einen Kalibrierungswert zu berechnen. Für die Nachführung der Position der Mobilstation können anschließend Infrastrukturmessungen verwendet werden, wobei um den Kalibrierungswert korrigiert wird.

Mit der Einführung von Verfahren zur Positionsbestimmung von Mobilstationen in Funkkommunikationssystemen besteht auch der Bedarf, die Genauigkeit der Positionsbestimmung zu überprüfen. Dies ist insbesondere dadurch motiviert, dass die Kunden des jeweiligen ortsbezogenen Dienstes und auch die Mobilfunkbetreiber ein Interesse daran haben, zu erfahren, mit welcher Genauigkeit Mobilstationen positioniert werden. Zur Überprüfung der Genauigkeit wird die Differenz aus der vom Funkkommunikationssystem bestimmten Position und der wirklichen Position der Mobilstation gebildet. Hierzu wird das Funkkommunikationssystems aufgefordert, die Position einer Mobilstation innerhalb des Funkkommunikationssystems zu bestimmen, wobei die Aufforderung zum Beispiel über das GMLC (Gateway Mobile Location Centre) des Funkkommunikationssystems erfolgt. Die Positionsbestimmung kann auch von dem Nutzer einer Mobilstation angestoßen werden, indem dieser einen Notruf mit seiner Mobilstation absetzt. Parallel hierzu wird die wirkliche Position der Mobilstation bestimmt. Nachdem derartige Bestimmungen an mehreren Orten durchgeführt wurden, werden die unterschiedlich bestimmten Positionen unabhängig voneinander auf einen Computer geladen und dort offline ausgewertet. Hierdurch kann das Ergebnis der Überprüfung somit nicht vor Ort angezeigt werden, sondern erst nach Abschluss der Messreihe. Hierbei besteht auch das Problem, dass sorgfältig darauf geachtet werden muss, die jeweils richtigen zueinander korrespondierenden Positionen aus den beiden Bestimmungsverfahren miteinander zu vergleichen.

Der Erfindung liegt die Aufgabe zugrunde, ein effizientes Verfahren und eine ebensolche Vorrichtung zur Behandlung von Positionsbestimmungen aufzuzeigen, welche im Rahmen einer Überprüfung der durch ein Funkkommunikationssystem durchgeführten Bestimmung der Position einer Mobilstation eingesetzt werden können. Insbesondere soll die Überprüfung ein Ergebnis schnell und vor Ort am Aufenthaltsort der Mobilstation liefern.

Diese Aufgabe wird hinsichtlich des Verfahrens durch ein Verfahren mit den Merkmalen des Anspruchs 1 gelöst.

Vorteilhafte Ausgestaltungen und Weiterbildungen sind Gegenstand von Unteransprüchen.

Das erfindungsgemäße Verfahren zur Behandlung von Positionsbestimmungen im Zusammenhang mit einer Überprüfung der durch ein Funkkommunikationssystem durchgeführten Bestimmung der Position einer Mobilstation umfasst die folgenden Schritte:
- Bestimmung der Position der Mobilstation durch eine sich am Aufenthaltsort der Mobilstation befindliche erste Einrichtung unabhängig von der Positionsbestimmung durch das Funkkommunikationssystem,
- Abfragen der Position der Mobilstation von dem Funkkommunikationssystem durch eine zweite Einrichtung und Empfanger der vom Funkkommunikationssystem bestimmten Parition der Mobilstation durch die zweite Einrichtung,
- Übermitteln der vom Funkkommunikationssystem bestimmten Position der Mobilstation von der zweiten Einrichtung an die sich am Anfenthaltsort der Mobilstation befindliche erste Einrichtung.

Bei den drei Schritten kann es sich um vorbereitende Schritte für eine Überprüfung der durch das Funkkommunikationssystem durchgeführten Positionsbestimmung handeln. Der erstgenannte Schritt der Bestimmung der Position der Mobilstation durch die erste Einrichtung muss nicht vor den anderen beiden Schritten durchgeführt werden, sondern kann auch an zweiter oder dritter Stelle stehen. Die erste Einrichtung befindet sich am Aufenthaltsort der Mobilstation, so dass sie in der Lage ist, diesen Aufenthaltsort zu bestimmen. Allerdings muss sich die erste Einrichtung nicht exakt am Ort der Mobilstation befinden, vorzugsweise befindet sie sich jedoch in unmittelbarer Nähe der Mobilstation. Besteht die erste Einrichtung aus mehreren Komponenten, so ist es möglich, dass sich nur ein Teil der ersten Einrichtung bei der Mobilstation befindet.

Die Position der Mobilstation wird von der ersten Einrichtung unabhängig von der Positionsbestimmung durch das Funkkommunikationssystem bestimmt. Die Positionsbestimmung durch die erste Einrichtung erfolgt somit nicht mittels des gleichen Verfahrens unter Mitwirkung der gleichen Verfahrensbeteiligten wie die Positionsbestimmung innerhalb des Funkkommunikationssystems.

Bei den von der ersten Einrichtung und von dem Funkkommunikationssystem bestimmten Positionen kann es sich um zweidimensionale oder um dreidimensionale Ortsangaben handeln. Die vom Funkkommunikationssystem durchgeführte Positionsbestimmung kann z.B. gemäß den an sich bekannten Verfahren CITA, AGPS, EOTD oder UTDOA erfolgen. Die zweite Einrichtung fragt die Position der Mobilstation von dem Funkkommunikationssystem ab. Hierzu besteht eine geeignete Schnittstelle zwischen der zweiten Einrichtung und dem Funkkommunikationssystem. Über diese Schnittstelle kann die zweite Einrichtung mit einem oder mehreren Bestandteilen des Funkkommunikationssystems, insbesondere mit einer für die Lokalisierung von Mobilstationen in dem Funkkommunikationssystem zuständigen Einrichtung, verbunden sein.

Die erste und die zweite Einrichtung können insofern von dem Funkkommunikationssystem getrennt sein, als sie außerhalb des erfindungsgemäßen Verfahrens keine anderen Aufgaben innerhalb des Funkkommunikationssystems wahrnehmen. Insbesondere können die erste und die zweite Einrichtung von dem Funkkommunikationssystem entfernt werden, ohne den sonstigen Betrieb des Funkkommunikationssystems zu beeinflussen.

Einer Ausgestaltung der Erfindung gemäß fordert die erste Einrichtung die zweite Einrichtung unter Mitteilung von Identifikationsinformation der Mobilstation zum Abfragen der Position der Mobilstation von dem Funkkommunikationssystem auf. Weiterhin fragt die zweite Einrichtung die Position der Mobilstation von dem Funkkommunikationssystem ab, wobei bei dieser Abfrage eine Mitteilung der Identifikationsinformation der Mobilstation erfolgt. Bei der Identifikationsinformation der Mobilstation handelt es sich um eine oder mehrere Größen, anhand derer die Mobilstation in dem Funkkommunikationssystem eindeutig charakterisiert ist.

Vorteilhaft ist es, wenn die erste Einrichtung die von der zweiten Einrichtung übermittelte Position mit der von der ersten Einrichtung bestimmten Position vergleicht. Der Vergleich kann zum Beispiel durch eine geeignete Kombination, wie zum Beispiel eine gegebenenfalls gewichtete Differenzbildung, erfolgen. Der Verfahrensschritt des Vergleichens entspricht der Überprüfung der durch das Funkkommunikationssystem durchgeführten Positionsbestimmung.

Einer Ausgestaltung der Erfindung gemäß sind die erste und die zweite Einrichtung über eine Funkschnittstelle miteinander verbunden. Hierbei können sich die beiden Einrichtungen insbesondere der gleichen Funktechnologie wie das Funkkommunikationssystem bedienen, so dass Nachrichten zwischen der ersten und der zweiten Einrichtung über das Funkkommunikationssystem gesendet werden können. Die Verbindung zwischen der ersten und der zweiten Einrichtung kann direkt, wie zum Beispiel durch die Verwendung von Einrichtungen, in welche die entsprechende Funktechnologie eingebaut oder eingesteckt ist, oder über andere Einrichtungen erfolgen, wie zum Beispiel über Mobilstationen, welche geeignete Schnittstellen zu der ersten und der zweiten Einrichtung aufweisen.

Mit Vorzug bestimmt die zweite Einrichtung eine Zeitdifferenz zwischen dem Versenden der Abfrage an das Funkkommunikationssystem und dem Empfang der Position von dem Funkkommunikationssystem. Diese Größe kann neben der Überprüfung der Genauigkeit der Positionsbestimmung eine weitere Qualitätsangabe betreffend die Positionsbestimmung durch das Funkkommunikationssystem darstellen.

Weiterhin wird die oben genannte Aufgabe hinsichtlich des Verfahrens durch ein Verfahren mit den Merkmalen des Anspruchs 6 gelöst.

Erfindungsgemäß umfasst das Verfahren zur Behandlung von Positionsbestimmungen im Zusammenhang mit einer Überprüfung der durch ein Funkkommunikationssystem durchgeführten Bestimmung der Position einer Mobilstation die folgenden Schritte:
- Bestimmung der Position der Mobilstation durch eine sich am Aufenthaltsort der Mobilstation befindliche erste Einrichtung unabhängig von der Positionsbestimmung durch das Funkkommunikationssystem,
- Abfragen der Position der Mobilstation von dem Funkkommunikationssystem durch die sich am Aufenthaltsort der Mobilstation befindliche erste Einrichtung und Empfangen der vom Funkkommunikationssystem bestimmten Position der Mobilstation durch die sich Aufenthaltsort der Mobilstation befindliche erste Einrichtung.

Bei diesem Verfahren führt die erste Einrichtung den im zuvor beschriebenen Verfahren von der zweiten Einrichtung durchgeführten Schritt des Abfragens und des Empfangs der Position der Mobilstation von dem Funkkommunikationssystem durch. Auf analoge Weise kann die erste Einrichtung in den Ausgestaltungen und Weiterbildungen des zuvor beschriebenen Verfahrens aufgeführte von der zweiten und/oder von der ersten Einrichtung durchgeführte Schritte durchführen.

Die zum Abfragen und Empfangen durch die erste Einrichtung verwendete Verbindung zum Funkkommunikationssystem kann z.B. über das Internet erfolgen, welches eine Anfrage der ersten Einrichtung empfängt, über eine geeignete Schnittstelle zu dem Funkkommunikationssystem weiterleitet und die von dem Funkkommunikationssystem bestimmte Position an die erste Einrichtung weiterleitet. Die Anbindung der ersten Einrichtung an das Internet kann z.B. eine Funkverbindung umfassen.

Die oben genannte Aufgabe hinsichtlich der Vorrichtung wird durch eine Vorrichtung mit den Merkmalen des Anspruchs 7 gelöst.

Vorteilhafte Ausgestaltungen und Weiterbildungen sind Gegenstand von Unteransprüchen.

Die erfindungsgemäße Vorrichtung dient zur Behandlung von Positionsbestimmungen im Zusammenhang mit einer Überprüfung der durch ein Funkkommunikationssystem durchgeführten Bestimmung der Position einer Mobilstation. Sie umfasst eine sich am Aufenthaltsort der Mobilstation befindliche erste Einrichtung und eine zweite Einrichtung. Die erste Einrichtung weist Mittel zum Bestimmen der Position der Mobilstation unabhängig von der Positionsbestimmung durch das Funkkommunikationssystem auf. Die zweite Einrichtung weist Mittel zum Abfragen der Position der Mobilstation von dem Funkkommunikationssystem und zum Empfangen der vom Funkkommunikationsystem bestimmten Position der Mobilstation und Mittel zum Übermitteln der vom Funkkommunikationssystem bestimmten Position der Mobilstation an die sich am Aufenthaltsort der Mobilstation befindliche erste Einrichtung auf.

Vorteilhafterweise weist die erste Einrichtung Mittel zum Auffordern der zweiten Einrichtung unter Mitteilung von Identifikationsinformation der Mobilstation zum Abfragen der Position der Mobilstation von dem Funkkommunikationssystem auf. Weiterhin weist die zweite Einrichtung Mittel zum Abfragen der Position der Mobilstation von dem Funkkommunikationssystem unter Mitteilung der Identifikationsinformationen der Mobilstation auf.

In Weiterbildung der Erfindung weist die erste Einrichtung Mittel zum Vergleichen der von der zweiten Einrichtung übermittelten Position mit der von der ersten Einrichtung bestimmten Position auf.

Mit Vorzug sind die erste Einrichtung und die zweite Einrichtung über eine Funkschnittstelle miteinander verbunden.

Es ist vorteilhaft, wenn die zweite Einrichtung Mittel zum Bestimmen einer Zeitdifferenz zwischen dem Versenden der Abfrage an das Funkkommunikationssystem und dem Empfang der Position von dem Funkkommunikationssystem aufweist.

Weiterhin wird die oben genannte Aufgabe hinsichtlich der Vorrichtung wird durch eine Vorrichtung mit den Merkmalen des Anspruchs 12 gelöst.

Die erfindungsgemäße Vorrichtung umfasst eine sich am Aufenthaltsort der Mobilstation befindliche erste Einrichtung mit
- Mitteln zum Bestimmen der Position der Mobilstation unabhängig von der Positionsbestimmung durch das Funkkommunikationssystem und
- Mitteln zum Abfragen der Position der Mobilstation von dem Funkkommunikationssystem und zum Empfanger der vom Funkkommunikationssystem bestimmter Position der Mobilstation.

Bei dieser Vorrichtung weist die erste Einrichtung die bei der zuvor beschriebenen Vorrichtung von der zweiten Einrichtung aufgewiesenen Mittel zum Abfragen und Empfangen der Position der Mobilstation von dem Funkkommunikationssystem auf. Auf analoge Weise kann die erste Einrichtung in den Ausgestaltungen und Weiterbildungen der zuvor beschriebenen Vorrichtung aufgeführte von der zweiten und/oder von der ersten Einrichtung aufgewiesene Mittel aufweisen. Die erste Einrichtung kann über ein Verbindungsnetz, wie z.B. per Funk über das Internet mit dem Funkkommunikationssystem verbunden sein.

Die erste wie auch die zweite Einrichtung können auch durch mehrere miteinander verbundene Einzeleinrichtungen realisiert sein, so dass die verschiedenen Mittel, welche die erste und die zweite Einrichtung aufweisen, auch in verschiedenen Einzeleinrichtungen lokalisiert sein können.

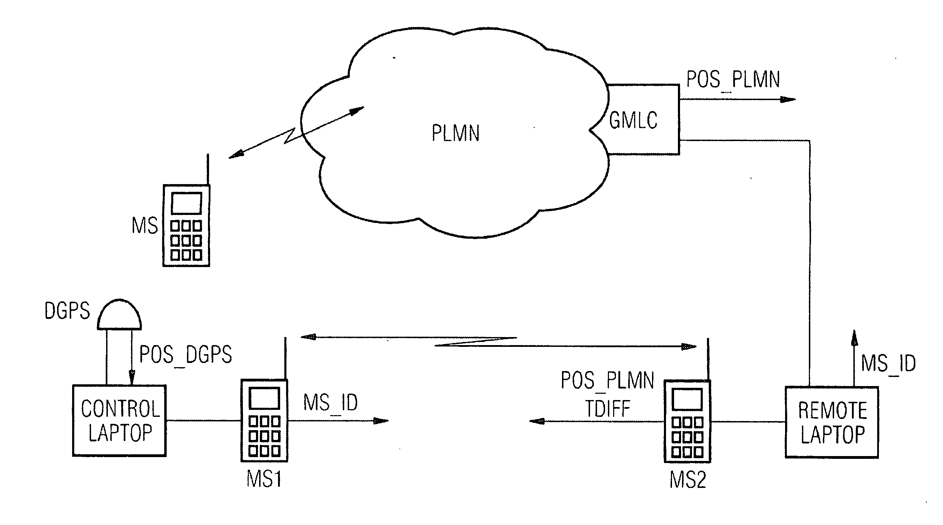

Im folgenden wird die Erfindung anhand eines Ausführungsbeispiels näher erläutert. Dabei zeigt
- Figur 1:: die erfindungsgemäße Vorrichtung und ein Funkkommunikationssystem.

In Figur 1 ist ein Funkkommunikationssystem PLMN dargestellt, welches z.B. nach dem Standard GSM (Global System for Mobile Communications) oder UMTS (Universal. Telecommunications System) ausgestaltet sein kann. Bestandteil des Funkkommunikationssystems PLMN ist die Mobilstation MS, welche über Funk mit Einrichtungen des Funkkommunikationssystems PLMN kommunizieren kann. Aufgrund der Möglichkeit zur Funkkommunikation zwischen der Mobilstation MS und Einrichtungen des Funkkommunikationssystems PLMN, in Figur 1 durch einen Doppelpfeil symbolisiert, ist es dem Funkkommunikationssystem PLMN möglich, eine Positionsbestimmung der Mobilstation MS vorzunehmen.

Um die Genauigkeit der Positionsbestimmung des Funkkommunikationssystems PLMN zu überprüfen, wird ein erster Computer CONTROL LAPTOP mit einem DGPS-Empfänger DGPS (DGPS: Differential GPS) eingesetzt, der dem ersten Computer CONTROL LAPTOP die Bestimmung der wirklichen Position POS DGPS der Mobilstation MS ermöglicht. Hierzu befindet sich der erste Computer CONTROL LAPTOP in der Nähe der Mobilstation MS. Der erste Computer CONTROL LAPTOP ist mit einer Mobilstation MS1 verbunden, durch welche er eine Funkschnittstelle zur Kommunikation aufweist. Die Mobilstation MS, der erste Computer CONTROL LAPTOP mit seinem DGPS-Empfänger DGPS und die Mobilstation MS1 befinden sich vorzugsweise in einem mobilen Messfahrzeug, so dass die Überprüfung der Genauigkeit der Positionsbestimmung des Funkkommunikationssystems PLMN an verschiedenen Orten durchgeführt werden kann. Zur Vorbereitung des Verfahrens zur Überprüfung der Positionsbestimmung des Funkkommunikationssystems PLMN bestimmt der erste Computer CONTROL LAPTOP unter Verwendung des DGPS-Empfänger DGPS die wirkliche Position POS_DGPS der Mobilstation MS.

Durch die Mobilstation MS1 kann der erste Computer CONTROL LAPTOP mit einem zweiten Computer REMOTE LAPTOP kommunizieren, wobei die Kommunikation über eine mit dem zweiten Computer REMOTE LAPTOP verbundene Mobilstation MS2 erfolgt. Die Kommunikation zwischen den Mobilstationen MS1 und MS2, in Figur 1 durch einen Doppelpfeil zwischen den Mobilstationen MS1 und MS2 symbolisiert, kann auch über das Funkkommunikationssystem PLMN erfolgen. In diesem Fall sind die beiden Mobilstationen MS1 und MS2 Bestandteil des Funkkommunikationssystems PLMN und sind gemäß der in dem Funkkommunikationssystem PLMN verwendeten Funkzugangstechnologie ausgestattet.

Über die Mobilstation MS1 teilt der erste Computer CONTROL LAPTOP dem zweiten Computer REMOTE LAPTOP Identifikationsinformation MS_ID der Mobilstation MS mit. Anhand dieser Identifikationsinformation MS_ID ist die Mobilstation MS in dem Funkkommunikationssystem PLMN eindeutig charakterisiert. Implizit oder explizit fordert der erste Computer CONTROL LAPTOP den zweiten Computer REMOTE LAPTOP mit der Übermittlung der Identifikationsinformation MS_ID dazu auf, von dem Funkkommunikationssystem PLMN die Position der Mobilstation MS abzufragen.

Der zweite Computer REMOTE LAPTOP ist mit einer Einrichtung GMLC verbunden, über welche er eine Anfrage an das Funkkommunikationssystem PLMN zur Bestimmung der Position der Mobilstation MS stellt. Die Einrichtung GMLC kann im Funkkommunikationssystem PLMN ein Verfahren zur Bestimmung der Position der Mobilstation MS auslösen. Das Ergebnis der Positionsbestimmung innerhalb des Funkkommunikationssystems PLMN wird an die Einrichtung GMLC geliefert. In der Regel handelt es sich bei der Schnittstelle der Einrichtung GMLC zu Einrichtungen außerhalb des Funkkommunikationssystems um eine standardisierte Schnittstelle, die für verschiedene Funkkommunikationssysteme gleich ist. Die Anfrage des zweiten Computers REMOTE LAPTOP erfolgt unter Verwendung einer Software, welche sich entsprechend der Schnittstelle zur Einrichtung GMLC eines standardisierten Protokolls bedient. In der Anfrage nimmt der zweite Computer REMOTE LAPTOP Bezug auf die ihm vom ersten Computer CONTROL LAPTOP übermittelte Identifikationsinformation MS_ID. Das Funkkommunikationssystem PLMN führt die Positionsbestimmung der Mobilstation MS durch und übermittelt die bestimmte Position POS_PLMN über die Einrichtung GMLC an den zweiten Computer REMOTE LAPTOP, welcher die Position POS_PLMN über die Mobilstation MS2 weiter an den ersten Computer CONTROL LAPTOP sendet.

Weiterhin kann der zweite Computer REMOTE LAPTOP die Zeitdauer TDIFF bestimmen, welche zwischen der Versendung der Anfrage an die Einrichtung GMLC und dem Empfang der Position von der Einrichtung GMLC verstreicht. Diese Zeitdauer TDIFF kann dann dazu genutzt werden, einzuschätzen, wie schnell in der Regel eine Positionsbestimmung innerhalb des Funkkommunikationssystems PLMN erfolgt. Die Zeitdauer TDIFF wird zusammen mit der Position POS_PLMN an den ersten Computer CONTROL LAPTOP übermittelt.

Nach dem Empfang der von dem Funkkommunikationssystem bestimmten Position POS_PLMN bestimmt der erste Computer CONTROL LAPTOP erneut die wirkliche Position POS_DGPS der Mobilstation MS. Die von dem ersten Computer CONTROL LAPTOP bestimmten Positionen POS_DGPS werden dann von dem ersten Computer CONTROL LAPTOP mit der von dem Funkkommunikationssystem PLMN bestimmten Position POS_PLMN verglichen. Hierzu kann vor dem Vergleich eine geeignete Kombination der beiden von dem ersten Computer CONTROL LAPTOP bestimmen Positionen POS_DGPS erfolgen, falls die beiden Positionen POS_DGPS voneinander abweichen. Eine zweite Bestimmung der Position POS_DGPS dient zur Beurteilung, ob das Verfahren unter stationären Bedingungen durchgeführt wurde, d.h., ob der Aufenthaltsort der Mobilstation MS bei der Positionsbestimmung durch den ersten Computer CONTROL LAPTOP und durch das Funkkommunikationssystem PLMN die gleiche war.

Somit liegt das Ergebnis der Überprüfung der Positionsbestimmung des Funkkommunikationssystems PLMN sofort in dem ersten Computer CONTROL LAPTOP vor, ohne dass es einer Datenübertragung an eine weitere Einrichtung bedarf. Das Ergebnis kann direkt vor Ort am aktuellen Aufenthaltsort der Mobilstation MS ausgewertet und analysiert werden. Wird das Verfahren an mehreren Orten durchgeführt, so können die ortsabhängigen Ergebnisse von dem ersten Computer CONTROL LAPTOP statistisch erfasst und durch Karten visualisiert werden.

Die Tatsache, dass das Ergebnis direkt am Ort der Mobilstation vorliegt, ist vorteilhaft, da die Genauigkeit, mit welcher ein Funkkommunikationssystem die Mobilstation positionieren kann, häufig von der örtlichen Umgebung der Mobilstation abhängt. So können dadurch, dass das Ergebnis der Überprüfung vor Ort vorliegt, Rückschlüsse über die Korrelation zwischen der Genauigkeit und der Umgebung gezogen werden. So können Schwachstellen in der Versorgung in Bezug auf ortsbezogene Dienste reduziert werden. Weiterhin kann vor Ort entschieden werden, ob die jeweilige Umgebung weitergehend untersucht werden soll.

Es ist zu betonen, dass das beschriebene Verfahren unabhängig von dem vom Funkkommunikationssystem durchgeführten Verfahren der Positionsbestimmung ist, d.h., die Erfindung ist auf verschiedenste Arten der Positionsbestimmung innerhalb von Funkkommunikationssystemen anwendbar. Auch die konkrete Ausgestaltung des Funkkommunikationssystems ist für das Verfahren nicht relevant, sofern eine, vorzugsweise standardisierte Schnittstelle zwischen dem Funkkommunikationssystem und dem zweiten Computer REMOTE LAPTOP zur Übermittlung einer Anfrage zur Positionsbestimmung und zur Rückübermittlung des Ergebnisses der Positionsbestimmung vorhanden ist.

Von Vorteil bei dem beschriebenen Verfahren ist, dass keine direkte Verbindung zwischen dem ersten Computer CONTROL LAPTOP und der Mobilstation MS benötigt wird, da das Verfahren keinen Schritt aufweist, in welchem ein Informations- oder Anweisungsaustausch zwischen dem ersten Computer CONTROL LAPTOP und der Mobilstation MS stattfindet. Hierdurch kann eine Überprüfung der Positionsbestimmung eines Funkkommunikationssystem in Bezug auf unterschiedlichste Mobilstationen erfolgen, ohne dass die unterschiedlichen Schnittstellen der Mobilstationen zu dem ersten Computer CONTROL LAPTOP berücksichtigt werden müssen.

Weiterhin kann das beschriebene Verfahren in Bezug auf eine Mehrzahl von gleich- oder verschiedenartigen Mobilstationen parallel durchgeführt werden, wodurch eine Effektivitätssteigerung bei der Überprüfung der Positionsbestimmung eines Funkkommunikationssystems erreicht werden kann.

Alternativ zum bisher beschriebenen Vorgehen ist es auch möglich, dass der erste Computer CONTROL LAPTOP über eine geeignete Schnittstelle an die Einrichtung GMLC angebunden ist, so dass auf die Verwendung des zweiten Computers REMOTE LAPTOP verzichtet werden kann. Eine solche Schnittstelle kann über das Internet vorhanden sein. Von Vorteil bei der Verwendung eines zweiten Computers REMOTE LAPTOP ist jedoch, dass der Netzbetreiber den Zugang bzw. die Verbindung zu der Einrichtung GMLC lediglich dem zweiten Computer REMOTE LAPTOP gestatten muss, und nicht einem schwer zu kontrollierenden Verbindungsnetz zwischen dem ersten Computer CONTROL LAPTOP und der Einrichtung GMLC wie z.B. dem Internet.

## Patentansprüche

1. Verfahren zur Behandlung von Positionsbestimmungen im Zusammenhang mit einer Überprüfung der durch ein Funkkommunikationssystem (PLMN) durchgeführten Bestimmung der Position (POS_PLMN) einer Mobilstation(MS),
**dadurch gekennzeichnet, dass** es die folgenden Schritte umfasst:
- Bestimmung der Position (POS_DGPS) der Mobilstation (MS) durch eine sich am Aufenthaltsort der Mobilstation (MS) befindliche erste Einrichtung (CONTROL LAPTOP) unabhängig von der Positionsbestimmung durch das Funkkommunikationssystem (PLMN),
- Abfragen der Position (POS_PLMN) der Mobilstation (MS) von dem Funkkommunikationssystem (PLMN) durch eine zweite Einrichtung (REMOTE LAPTOP) und Empfangen der vom Funkkommunikationssystem (PLMN) bestimmten Position (POS_PLMN) der Mobilstation (MS) durch die zweite Einrichtung (REMOTE LAPTOP),
- Übermitteln der vom Funkkommunikationssystem (PLMN) bestimmten Position (POS_PLMN) der Mobilstation (MS) von der zweiten Einrichtung (REMOTE LAPTOP) an die sich am Aufenthaltsort der Mobilstation (MS) befindliche erste (CONTROL LAPTOP) Einrichtung.

2. Verfahren nach Anspruch 1, bei dem
- die erste Einrichtung (CONTROL LAPTOP) die zweite Einrichtung (REMOTE LAPTOP) unter Mitteilung von Identifikationsinformation (MS_ID) der Mobilstation (MS) zum Abfragen der Position (POS_PLMN) der Mobilstation (MS) von dem Funkkommunikationssystem (PLMN) auffordert, und
- die zweite Einrichtung (REMOTE LAPTOP) die Position (POS_PLMN) der Mobilstation (MS) von dem Funkkommunikationssystem (PLMN) unter Mitteilung der Identifikationsinformation (MS_ID) der Mobilstation (MS) abfragt.

3. Verfahren nach Anspruch 1 oder 2, bei dem
die erste Einrichtung (CONTROL LAPTOP) die von der zweiten Einrichtung (REMOTE LAPTOP) übermittelte Position (POS_PLMN) mit der von der ersten Einrichtung (CONTROL LAPTOP) bestimmten Position (POS_DGPS) vergleicht.

4. Verfahren nach einem der Ansprüche 1 bis 3, bei dem
die erste Einrichtung (CONTROL LAPTOP) und die zweite Einrichtung (REMOTE LAPTOP) über eine Funkschnittstelle miteinander verbunden sind.

5. Verfahren nach einem der Ansprüche 1 bis 4, bei dem
die zweite Einrichtung (REMOTE LAPTOP) eine Zeitdifferenz (TDIFF) zwischen dem Versenden der Abfrage an das Funkkommunikationssystem (PLMN) und dem Empfang der Position (POS_PLMN) von dem Funkkommunikationssystem (PLMN) bestimmt.

6. Verfahren zur Behandlung von Positionsbestimmungen im Zusammenhang mit einer Überprüfung der durch ein Funkkommunikationssystem (PLMN) durchgeführten Bestimmung der Position (POS_PLMN) einer Mobilstation (MS),
**dadurch gekennzeichnet, dass** es die folgenden Schritte umfasst:
- Bestimmung der Position (POS_DGPS) der Mobilstation (MS) durch eine sich am Aufenthaltsort der Mobilstation (MS) befindliche erste Einrichtung (CONTROL LAPTOP) unabhängig von der Positionsbestimmung durch das Funkkommunikationssystem (PLMN),
- Abfragen der Position (POS_PLMN) der Mobilstation (MS) von dem Funkkommunikationssystem (PLMN) durch die sich am Aufenthaltsort der Mobilstation (MS) befindliche erste Einrichtung (CONTROL LAPTOP)und Empfangen der vom Funkkommunikationssystem (PLMN) bestimmten Position (POS_PLMN) der Mobilstation (MS) durch die sich am Aufenthaltsort der Mobilstation (MS) befindliche erste Einrichtung (CONTROL LAPTOP).

7. Vorrichtung zur Behandlung von Positionsbestimmungen im Zusammenhang mit einer Überprüfung der durch ein Funkkommunikationssystem (PLMN) durchgeführten Bestimmung der Position (POS_PLMN) einer Mobilstation (MS),
**gekennzeichnet durch**
eine sich am Aufenthaltsort der Mobilstation (MS) befindliche erste Einrichtung (CONTROL LAPTOP) und eine zweite Einrichtung (REMOTE LAPTOP), wobei
- die erste Einrichtung (CONTROL LAPTOP)
Mittel (DGPS) zum Bestimmung der Position (POB_DGPS) der Mobilstation (MS) unabhängig von der Positionsbestimmung **durch** das Funkkommunikationssystem (PLMN), und
- die zweite Einrichtung (REMOTE LAPTOP)
Mittel zum Abfragen der Position (POS_PLMN) der Mobilstation (MS) von dem Funkkommunikationssystem (PLMN) und zum Empfangen der vom Funkkommunikationssystem (PLMN) bestimmten Position (POS_PLMN) der Mobilstation (MS), und
Mittel (MS2) zum Übermitteln der vom Funkkommunikationssystem (PLMN) bestimmten Position (POS_PLMN) der Mobilstation (MS) an die sich am Aufenthaltsort der Mobilstation (MS) befindliche erste Einrichtung (CONTROL LAPTOP)
aufweisen.

8. Vorrichtung nach Anspruch 7, bei der
- die erste Einrichtung (CONTROL LAPTOP) Mittel zum Auffordern der zweiten Einrichtung (REMOTE LAPTOP) unter Mitteilung von Identifikationsinformation (MS_ID) der Mobilstation (MS) zum Abfragen der Position (POS_PLMN) der Mobilstation (MS) von dem Funkkommunikationssystem (PLMN) und
- die zweite Einrichtung (REMOTE LAPTOP) Mittel zum Abfragen der Position (POS_PLMN) der Mobilstation (MS) von dem Funkkommunikationssystem (PLMN) unter Mitteilung der Identifikationsinformation (MS_ID) der Mobilstation (MS)
aufweisen.

9. Vorrichtung nach Anspruch 7 der 8, bei der
die erste Einrichtung (CONTROL LAPTOP) Mittel zum Vergleichen der von der zweiten Einrichtung (REMOTE LAPTOP) übermittelten Position (POS_PLMN) mit der von der ersten Einrichtung (CONTROL LAPTOP) bestimmten Position (POS_DGPS) aufweist.

10. Vorrichtung nach einem der Ansprüche 7 bis 9, bei der
die erste Einrichtung (CONTROL LAPTOP) und die zweite Einrichtung (REMOTE LAPTOP) über eine Funkschnittstelle miteinander verbunden sind.

11. Vorrichtung nach einem der Ansprüche 7 bis 10, bei der die zweite Einrichtung (REMOTE LAPTOP) Mittel zum Bestimmen einer Zeitdifferenz (TDIFF) zwischen dem Versenden der Abfrage an das Funkkommunikationssystem (PLMN) und dem Empfang der Position (POS_PLMN) von dem Funkkommunikationssystem (PLMN) aufweist.

12. Vorrichtung zur Behandlung von Positionsbestimmungen im Zusammenhang mit einer Überprüfung der durch ein Funkkommunikationssystem (PLMN) durchgeführten Bestimmung der Position (POS_PLMN) einer Mobilstation (MS),
**gekennzeichnet durch**
eine sich am Aufenthaltsort der Mobilstation (MS) befindliche erste Einrichtung (CONTROL LAPTOP), wobei die erste Einrichtung (CONTROL LAPTOP)
- Mittel (DGPS) zum Bestimmung der Position (POS_DGPS) der Mobilstation (MS) unabhängig von der Positionsbestimmung **durch** das Funkkommunikationssystem (PLMN), und
- Mittel zum Abfragen der Position (POS_PLMN) der Mobilstation (MS) von dem Funkkommunikationssystem (PLMN) und zum Empfangen der vom Funkkommunikationssystem (PLMN) bestimmten Position (POS_PLMN) der Mobilstation (MS)
aufweist.

## Claims

1. Method for handling position determinations in conjunction with verifying the determination of the position (POS_PLMN) of a mobile station (MS) carried out by a radio communication system (PLMN),
**characterised in that**
it comprises the following steps:
- determining the position (POS_DGPS) of the mobile station (MS) by means of a first device (CONTROL LAPTOP) at the same location as the mobile station (MS), independently of the position determination carried out by the radio communication system (PLMN),
- enquiring into the position (POS_PLMN) of the mobile station (MS) from the radio communication system (PLMN) by means of a second device (REMOTE LAPTOP), and receiving the position (POS_PLMN) of the mobile station (MS) determined by the radio communication system (PLMN) via the said second device (REMOTE LAPTOP),
- transmitting the position (POS_PLMN) of the mobile station (MS) determined by the radio communication system (PLMN) from the second device (REMOTE LAPTOP) to the first device (CONTROL LAPTOP) at the location of the mobile station (MS).

2. Method according to claim 1, in which
- the first device (CONTROL LAPTOP) requests the second device (REMOTE LAPTOP), on sending information (MS_ID) identifying the mobile station concerned (MS), to find out the position (POS_PLMN) of said mobile station (MS) from the radio communication system (PLMN), and
- the second device (REMOTE LAPTOP) requests the position (POS_PLMN) of the mobile station (MS) from the radio communication system (PLMN), on sending information (MS_ID) identifying the mobile station concerned (MS).

3. Method according to claim 1 or 2, in which the first device (CONTROL LAPTOP) compares the position (POS_PLMN) transmitted by the second device (REMOTE LAPTOP) with the position (POS_DGPS) determined by the first device (CONTROL LAPTOP).

4. Method according to one of the claims 1 to 3, in which the first device (CONTROL LAPTOP) and the second device (REMOTE LAPTOP) are interconnected over a radio interface.

5. Method according to one of the claims 1 to 4, in which the second device (REMOTE LAPTOP) determines a time difference (TDIFF) between transmission of the query to the radio communication system (PLMN) and receiving the position (POS_PLMN) from the radio communication system (PLMN).

6. Method for handling position determinations in conjunction with verifying the determination of the position (POS_PLMN) of a mobile station (MS) carried out by a radio communication system (PLMN),
**characterised in that**
it comprises the following steps:
- determining the position (POS_DGPS) of the mobile station (MS) by means of a first device (CONTROL LAPTOP) at the same location as the mobile station (MS), independently of the position determination carried out by the radio communication system (PLMN),
- enquiring into the position (POS PLMN) of the mobile station (MS) from the radio communication system (PLMN) by means of the first device (CONTROL LAPTOP) at the same location as the mobile station (MS), and receiving the position (POS_PLMN) of the mobile station (MS) determined by the radio communication system (PLMN) via the first device (CONTROL LAPTOP) at the same location as the mobile station (MS).

7. Device for handling position determinations in conjunction with verifying the determination of the position (POS_PLMN) of a mobile station (MS) carried out by a radio communication system (PLMN),
**characterised by**
a first device (CONTROL LAPTOP) at the same location as the mobile station (MS) and a second device (REMOTE LAPTOP), wherein
- the first device (CONTROL LAPTOP)
has means (DGPS) for determining the position (POS_DGPS) of the mobile station (MS) independently of the position determination carried out by the radio communication system (PLMN), and
- The second device (REMOTE LAPTOP)
has means for enquiring into the position (POS_PLMN) of the mobile station (MS) from the radio communication system (PLMN) and for receiving the position (POS_PLMN) of the mobile station (MS) determined by the radio communication system (PLMN), and means (MS2) for transmitting the position (POS_PLMN) of the mobile station (MS) determined by the radio communication system (PLMN) to the first device (CONTROL LAPTOP) at the location of the mobile station (MS).

8. Device according to claim 7, in which
- the first device (CONTROL LAPTOP) has means for requesting the second device (REMOTE LAPTOP), on sending information (MS_ID) identifying the mobile station concerned (MS), to find out the position (POS_PLMN) of said mobile station (MS) from the radio communication system (PLMN), and
- the second device (REMOTE LAPTOP) has means for requesting the position (POS_PLMN) of the mobile station (MS) from the radio communication system (PLMN), on sending information (MS_ID) identifying the mobile station concerned (MS).

9. Device according to claim 7 or 8, in which the first device (CONTROL LAPTOP) has means for comparing the position (POS_PLMN) transmitted by the second device (REMOTE LAPTOP) with the position (POS_DGPS) determined by the first device (CONTROL LAPTOP).

10. Device according to one of the claims 7 to 9, in which the first device (CONTROL LAPTOP) and the second device (REMOTE LAPTOP) are interconnected over a radio interface.

11. Device according to one of the claims 7 to 10, in which the second device (REMOTE LAPTOP) has means for determining a time difference (TDIFF) between transmission of the query to the radio communication system (PLMN) and receiving the position (POS_PLMN) from the radio communication system (PLMN).

12. Device for handling position determinations in conjunction with verifying the determination of the position (POS_PLMN) of a mobile station (MS) carried out by a radio communication system (PLMN),
**characterised by**
a first device (CONTROL LAPTOP) at the same location as the mobile station (MS), wherein the first device (CONTROL LAPTOP)
- has means (DGPS) for determining the position (POS_DGPS) of the mobile station (MS) independently of the position determination carried out by the radio communication system (PLMN), and
- has means for enquiring into the position (POS_PLMN) of the mobile station (MS) from the radio communication system (PLMN) and for receiving the position (POS_PLMN) of the mobile station (MS) determined by the radio communication system (PLMN).

## Revendications

1. Procédé destiné au traitement de déterminations de position en relation avec un contrôle de la détermination, réalisée au moyen d'un système de radiocommunication (PLMN), de la position (POS_PLMN) d'une station mobile (MS),
**caractérisé en ce qu'**il comprend les étapes suivantes :
- détermination de la position (POS_DGPS) de la station mobile (MS) au moyen d'un premier dispositif (CONTROL LAPTOP) se trouvant à l'endroit de localisation de la station mobile (MS), indépendamment de la détermination de position au moyen du système de radiocommunication (PLMN),
- interrogation de la position (POS_PLMN) de la station mobile (MS) auprès du système de radiocommunication (PLMN) au moyen d'un deuxième dispositif (REMOTE LAPTOP) et réception de la position (POS_PLMN), déterminée par le système de radiocommunication (PLMN), de la station mobile (MS) au moyen du deuxième dispositif (REMOTE LAPTOP),
- transmission de la position (POS_PLMN), déterminée par le système de radiocommunication (PLMN), de la station mobile (MS) par le deuxième dispositif (REMOTE LAPTOP) au premier dispositif (CONTROL LAPTOP) se trouvant à l'endroit de localisation de la station mobile (MS).

2. Procédé selon la revendication 1, dans lequel
- le premier dispositif (CONTROL LAPTOP) invite le deuxième dispositif (REMOTE LAPTOP), en communiquant des informations d'identification (MS_ID) de la station mobile (MS), à demander la position (POS_PLMN) de la station mobile (MS) auprès du système de radiocommunication (PLMN), et dans lequel
- le deuxième dispositif (REMOTE LAPTOP) demande la position (POS_PLMN) de la station mobile (MS) auprès du système de radiocommunication (PLMN) en communiquant les informations d'identification (MS_ID) de la station mobile (MS).

3. Procédé selon la revendication 1 ou 2, dans lequel
le premier dispositif (CONTROL LAPTOP) compare la position (POS_PLMN) transmise par le deuxième dispositif (REMOTE LAPTOP) à la position (POS_DGPS) déterminée par le premier dispositif (CONTROL LAPTOP).

4. Procédé selon l'une quelconque des revendications 1 à 3, dans lequel
le premier dispositif (CONTROL LAPTOP) et le deuxième dispositif (REMOTE LAPTOP) sont connectés entre eux par l'intermédiaire d'une interface radio.

5. Procédé selon l'une quelconque des revendications 1 à 4, dans lequel
le deuxième dispositif (REMOTE LAPTOP) détermine une différence de temps (TDIFF) entre l'émission de la demande au système de radiocommunication (PLMN) et la réception de la position (POS_PLMN) par le système de radiocommunication (PLMN).

6. Procédé destiné au traitement de déterminations de position en relation avec un contrôle de la détermination, réalisée au moyen d'un système de radiocommunication (PLMN), de la position (POS_PLMN) d'une station mobile (MS),
**caractérisé en ce qu'**il comprend les étapes suivantes :
- détermination de la position (POS_DGPS) de la station mobile (MS) au moyen d'un premier dispositif (CONTROL LAPTOP) se trouvant à l'endroit de localisation de la station mobile (MS), indépendamment de la détermination de position au moyen du système de radiocommunication (PLMN),
- interrogation de la position (POS_PLMN) de la station mobile (MS) auprès du système de radiocommunication (PLMN) au moyen du premier dispositif (CONTROL LAPTOP) se trouvant à l'endroit de localisation de la station mobile (MS) et réception de la position (POS_PLMN), déterminée par le système de radiocommunication (PLMN), de la station mobile (MS) au moyen du premier dispositif (CONTROL LAPTOP) se trouvant à l'endroit de localisation de la station mobile (MS).

7. Dispositif destiné au traitement de déterminations de position en relation avec un contrôle de la détermination, réalisée au moyen d'un système de radiocommunication (PLMN), de la position (POS_PLMN) d'une station mobile (MS),
**caractérisé par**
un premier dispositif (CONTROL LAPTOP) se trouvant à l'endroit de localisation de la station mobile (MS) et un deuxième dispositif (REMOTE LAPTOP),
- le premier dispositif (CONTROL LAPTOP) présentant
des moyens (DGPS) destinés à déterminer la position (POS_DGPS) de la station mobile (MS) indépendamment de la détermination de position au moyen du système de radiocommunication (PLMN), et
- le deuxième dispositif (REMOTE LAPTOP) présentant
des moyens destinés à interroger la position (POS_PLMN) de la station mobile (MS) auprès du système de radiocommunication (PLMN) et à recevoir la position (POS_PLMN), déterminée par le système de radiocommunication (PLMN), de la station mobile (MS), et
des moyens (MS2) destinés à transmettre la position (POS_PLMN), déterminée par le système de radiocommunication (PLMN), de la station mobile (MS) au premier dispositif (CONTROL LAPTOP) se trouvant à l'endroit de localisation de la station mobile (MS).

8. Dispositif selon la revendication 7, dans lequel
- le premier dispositif (CONTROL LAPTOP) présente des moyens destinés à demander au deuxième dispositif (REMOTE LAPTOP), en communiquant des informations d'identification (MS_ID) de la station mobile (MS), la position (POS_PLMN) de la station mobile (MS) auprès du système de radiocommunication (PLMN) et dans lequel
- le deuxième dispositif (REMOTE LAPTOP) présente des moyens destinés à demander la position (POS_PLMN) de la station mobile (MS) auprès du système de radiocommunication (PLMN) en communiquant les informations d'identification (MS_ID) de la station mobile (MS).

9. Dispositif selon la revendication 7 ou 8, dans lequel
le premier dispositif (CONTROL LAPTOP) présente des moyens destinés à comparer la position (POS_PLMN) transmise par le deuxième dispositif (REMOTE LAPTOP) à la position (POS_DGPS) déterminée par le premier dispositif (CONTROL LAPTOP).

10. Dispositif selon l'une quelconque des revendications 7 à 9, dans lequel
le premier dispositif (CONTROL LAPTOP) et le deuxième dispositif (REMOTE LAPTOP) sont connectés entre eux par l'intermédiaire d'une interface radio.

11. Dispositif selon l'une quelconque des revendications 7 à 10, dans lequel
le deuxième dispositif (REMOTE LAPTOP) présente des moyens destinés à déterminer une différence de temps (TDIFF) entre l'émission de la demande au système de radiocommunication (PLMN) et la réception de la position (POS_PLMN) par le système de radiocommunication (PLMN).

12. Dispositif destiné au traitement de déterminations de position en relation avec un contrôle de la détermination, réalisée au moyen d'un système de radiocommunication (PLMN), de la position (POS_PLMN) d'une station mobile (MS),
**caractérisé par**
un premier dispositif (CONTROL LAPTOP) se trouvant à l'endroit de localisation de la station mobile (MS), le premier dispositif (CONTROL LAPTOP) présentant
- des moyens (DGPS) destinés à déterminer la position (POS_DGPS) de la station mobile (MS) indépendamment de la détermination de position au moyen du système de radiocommunication (PLMN), et
- des moyens destinés à demander la position (POS_PLMN) de la station mobile (MS) auprès du système de radiocommunication (PLMN) et à recevoir la position (POS_PLMN), déterminée par le système de radiocommunication (PLMN), de la station mobile (MS).
